# EUROPEAN PATENT APPLICATION

(11) **EP 1 212 940 A1**
(43) Date of publication of application: **12.06.2002**
(21) Application number: 01123355.8
(22) Date of filing: 09.10.2001
(51) Int. Cl.: A01K 61/00, A22C 25/04

(54) **Adjustable size selection device for ichthyological products**

(30) Priority: 26.10.2000 IT UD000201
(71) Applicant: Pighin, Giuseppe, 33030 Majano (Udine) (IT)
(72) Inventor: Pighin, Giuseppe, 33030 Majano (Udine) (IT)
(74) Representative: Cragnolini, Sergio

(57) **Abstract**

The present invention relates to a selection device for ichthyological products (5), characterized in that its selecting size is adjustable and in that it is constituted by two surfaces or series of cylinders (3, 4) or rods that have an identical and constant pitch, one series being staggered by half a pitch with respect to the other, forming as a whole a selecting grille. The said two surfaces are superimposed and vertically adjustable with respect to each other, thus determining the selecting distance between the cylinders or rods of one surface with respect to the other.

## Description

The present invention relates to a machine for selecting ichthyological products according to size with automatic size adjustment. The machine consists of two particular superimposed parallel planes, which are both inclined at an adjustable distance from each other and are actuated manually and/or automatically. Each grille-like plane has parallel rods that are fixed on the respective frame or other structures suitable for the purpose that have an equal pitch, but between the planes the rods are staggered by half a pitch; this is done to form a screen by affecting simultaneously the rods of both planes.

In the current art, in the ichthyological sector and particularly in the industrial ichthyological sector there is the need and requirement to select ichthyological products in general according to size, since the various products are processed and/or marketed differently according to their size. Various selecting systems are known.

These systems range from manual systems to systems or machines suitable for the purpose and designed for specific sizes. Manual systems entail selecting the size of the products manually and at the operator's discretion; the operator takes the bigger and larger products from the conveyor belt in order to transfer them into appropriate containers or vice versa. Mechanical selecting systems are instead conceived with limited size adjustments. The best-known ones in fact use a single particular selecting plane that comprises a plurality of parallel rods (having any sectional shape), which form a kind of grille and whose mutual distance is fixed or slightly adjustable.

Various drawbacks are observed with known systems: for the type with conventional manual selection, operator intervention is always required, and errors in judging the size of the selected product are possible; these drawbacks are overcome by the automatic mechanical system, but it has been found that these machines have a limited performance, since they cannot have a wide size range adjustment.

These machines for selecting are in fact designed according to the requirements of the customer and provide only a small size variation between one rod and the other, causing a low versatility of the machine. The drawback is worsened because the selecting plane is large and the rods are parallel and arranged side by side in a rectilinear fashion, and therefore the adjustments of each rod constantly with respect to the others requires very complicated and expensive mechanisms.

The aim of the present invention is to overcome the drawbacks found in known systems by providing an automatic machine for selecting that is capable of working over a wide range of sizes of ichthyological products.

The invention provides for the use of two selecting planes, each shaped like a grille composed of a plurality of parallel rods at mutually fixed distances, with a constant pitch, having any sectional shape and with a uniform or non-uniform cross-section. The two planes are provided with selecting rods that have the same pitch but are staggered by half a pitch with respect to each other. The two planes are superimposed and parallel, and in order to operate better they are inclined with respect to the horizontal, arranging the rods along the lines of maximum inclination. Said planes are mutually adjustable along the vertical and/or with respect to their parallel arrangement.

In this manner, the invention surpasses all known systems and is capable of operating over a wide range of sizes of ichthyological products.

In fact, if the two planes are superimposed or the same are intersected, the smallest gaps of the meshes thus formed between the rods of one plane and the rods of the second plane correspond to the distance between the outer surfaces of said rods. In order to increase, or adjust so as to increase, the distance between said surfaces it is sufficient to move, in a parallel manner, one selecting plane away from the other until the maximum size, equal to the distance of the pitch of the rods of one plane, is reached. The size range thus provided is wide and satisfactory for industrial requirements. Should one wish to further increase the size, one would have to make the rods of each plane mutually adjustable or manufacture planes with parallel rods having a greater pitch than the preceding ones.

The invention uses most preferably a fixed selecting plane with rods that are parallel, have a constant pitch and are fixed, and a second plane that is similar to the first one and is parallel thereto but has rods that are staggered by half a pitch and is rendered movable and adjustable vertically, i.e., at right angles and/or slightly obliquely (manually or with automated systems known to the person skilled in the art).

Accordingly, the selection device for ichthyological products is in practice an inclined surface composed of a plurality of parallel rods arranged respectively on two separate planes, which by cooperating in coordination with each other, provide a valid selecting system with a wide size range.

The selection device is thus inclined so as to facilitate and convey the mass of the product that is thinner than the distance between the rods by making it flow out by gravity through the same rods, while the larger product is conveyed, again by gravity, externally in the lowest point of the two selecting planes to be subsequently picked up. The selecting group thus conceived screens the ichthyological products, allowing the passage by gravity of the smaller ones through the grille rods formed by the two superimposed planes, while the larger ones remain above said planes.

A first variation to the present invention consists of the fact that instead of adjusting the distance of one fixed-rod plane with respect to the other it is possible to obtain the same result by providing a single plane, but with rods that are mutually movable and adjustable vertically or at right angles.

A second variation to the present invention consists of the fact that the above technical solution is applied as follows: the rods are alternately mutually fixed and/or adjustable vertically or at right angles.

A third variation to the present invention consists of the fact that the rods that constitute the grilles of the two superimposed planes are preferably rounded and/or cylindrical and that they can be fixed and/or able to rotate freely about themselves by being pivoted about their own longitudinal axis.

A fourth variation to the present invention consists of the fact that the rods that constitute the grilles of the planes or plane have a sectional shape that forms a closed and/or open geometric figure.

An embodiment according to the present invention is shown by way of preferred but non-limitative example in the accompanying three drawing sheets, wherein:
Figure 1 is a transverse sectional view of two selecting planes that can be adjusted vertically, with rods that have a constant pitch but are staggered by half a pitch between the two planes, the lower plane being fixed, the upper plane being movable;
Figure 2 is a transverse sectional view of a variation of the lower fixed plane as regards the shapes of the selecting rods that form the screening grille;

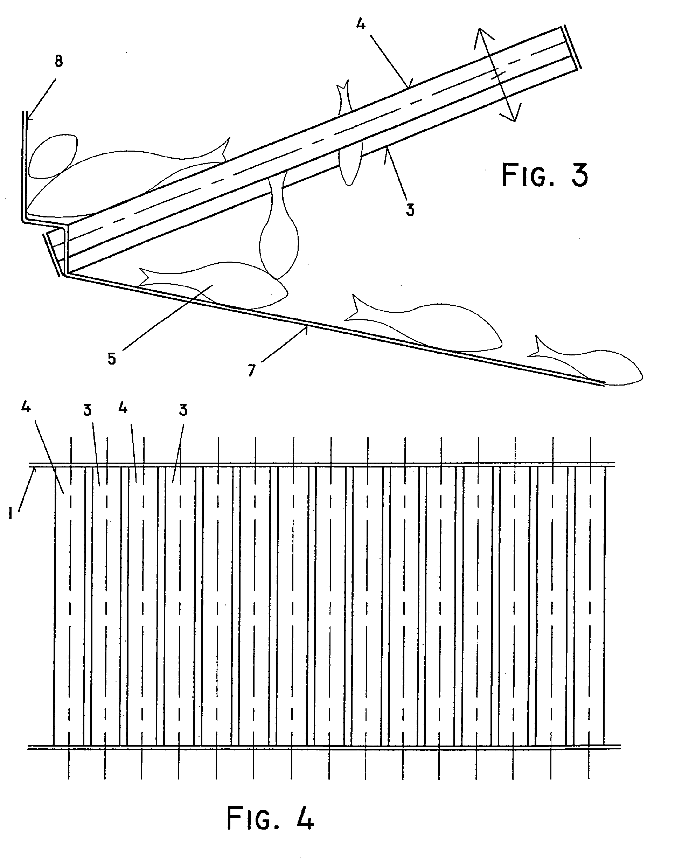

Figure 3 is a side view of the selection device for ichthyological products, illustrating the two vertically adjustable parallel planes, which are inclined in order to better perform their function by gravity;
Figure 4 is a front view of the inclined selecting group, illustrating the alternation of the selecting rods of the two planes;
Figure 5 is a transverse sectional view of a particular frame that supports a series of lower fixed cylinders and, alternately, other upper movable cylinders whose height is adjustable;
Figure 6 is a transverse sectional view of a particular frame that supports a series of upper fixed cylinders and, alternatively, other lower movable cylinders whose height is adjustable;
Figure 7 is a transverse sectional view of a particular embodiment in which all the cylinders of the two parallel series are mutually adjustable on planes that are parallel and at right angles to the planes of arrangement of the series of cylinders.

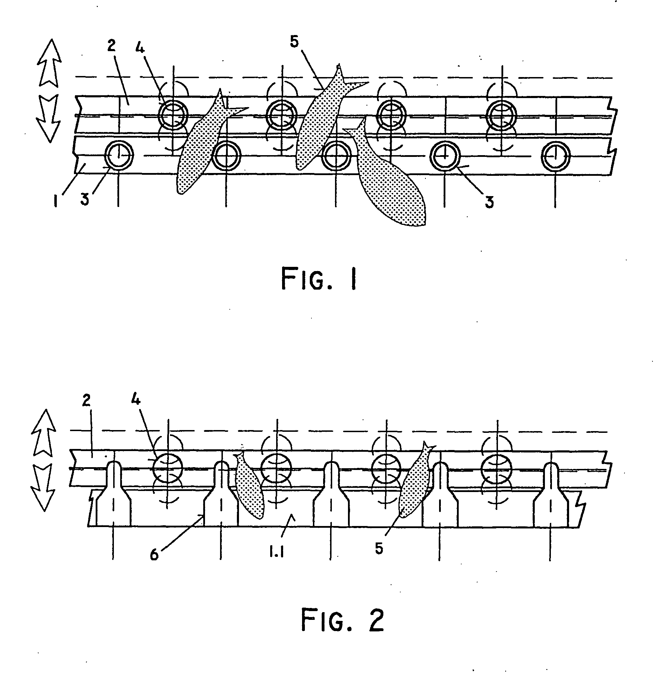

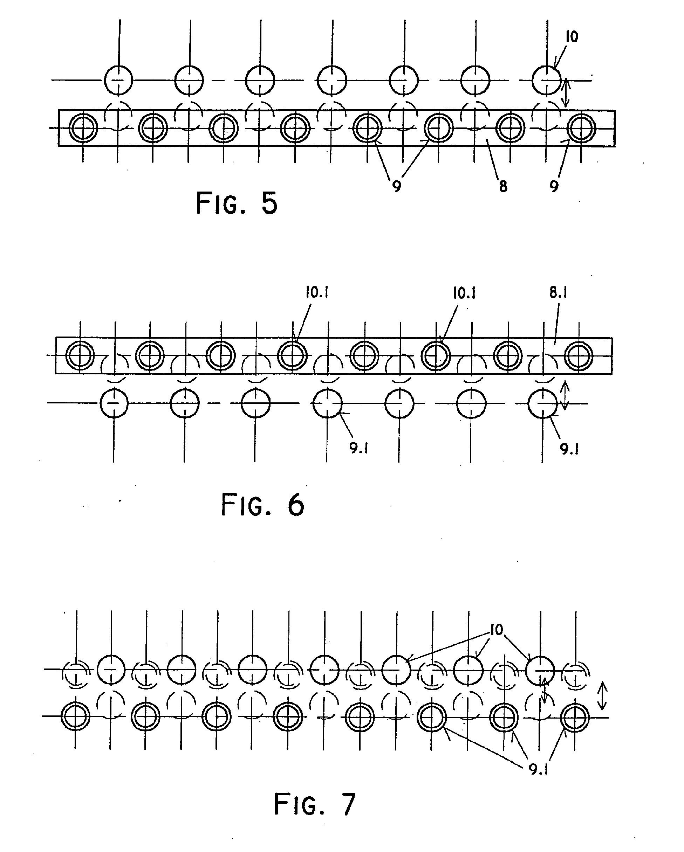

According to the invention and according to a first embodiment, in Figure 1 the selection device with adjustable size for ichthyological products is constituted by two parallel superimposed planes, both planes having a perimetric supporting frame (1) and (2) on which the series of grille rods are fixed, in this case tubular and cylindrical (3) and (4), but they can have any geometric shape. The grille rods are straight, parallel, have a constant and equal pitch on each plane, but are staggered by half a pitch on one plane with respect to the other. The superimposed arrangement of the two planes, in cooperation and coordination, each plane having its own rods (3) and (4), produces a selecting or screening surface that is composed of the rods of one plane alternately with the rods of the second plane. Since the rods in this case are fixed on the respective frames, the adjustment of their mutual distance, which also determines the screening size, occurs by moving mutually closer or further apart the planes or, in the subsequent cases, by vertical motion of at least one series of rods that are movable alternately to the fixed ones. Figure 5 in fact shows a possible embodiment with a fixed lower frame (8) with cylindrical tubular rods (9), with alternating cylinders (10) that can be adjusted vertically (at right angles) with respect to the former ones, while Figure 6 illustrates the opposite case, i.e., an upper fixed frame (8.1) with fixed cylinders (10.1) and alternating cylinders (9.1) that can move and be adjusted downward. Finally, Figure 7 illustrates an embodiment with a plane with a horizontal grid in which all the cylinders (9.1) and (10) are parallel and are vertically adjustable (on planes that are parallel and at right angles to the planes of the series of cylinders) . Said adjustments can be performed individually for each cylinder or rod and/or with suitable systems, by actuating alternatively one series of cylinders or rods with respect to the other series.

Conventional movement systems of the mechanical type and/or assisted by suitable automation systems known to the person skilled in the art are used for the synchronized and dimensional adjustment of the distance between the screening rods or cylinders.

The screening rods or cylinders can have any sectional geometric shape of the closed (4) or open (6) type (for example open downward on the frame 1.1) and can be fixed to the frame and/or able to rotate freely about their longitudinal axis.

## Claims

1. An adjustable size selection device for ichthyological products with adjustable size, **characterized in that** it comprises at least two screening surfaces or grilles that are superimposed, horizontal and/or oblique, parallel with an adjustable mutual distance, each being constituted by a plurality of screening elements formed by parallel straight rods that have an identical and constant pitch (with an open or closed, regular or irregular geometric cross-section) and/or cylinders or tubular elements (metallic or nonmetallic) (3, 4, 9, 9.1, 10, 10.1) that have the particularity of being mutually staggered (between the elements of one series and the other) by half a pitch and the same direction of arrangement. Screening occurs by coordination and cooperation between the two screening surfaces or series of cylinders or parallel rods, and the adjustment of the dimensional variation of the screening size occurs by moving closer or further apart said two screening surfaces at right angles in respect to the planes of arrangement of each series of cylinders.

2. The adjustable size selection device for ichthyological products according to the foregoing claim, **characterized in that** the screening elements, rods and/or cylinders, are fixed and/or free to rotate about themselves (according to the longitudinal axis) on the respective supporting frames (1, 2).

3. The adjustable size selection device for ichthyological products according to claim 1, **characterized in that** of said two screening surfaces with elements having a constant pitch and staggered by half a pitch, one, the lower one, is fixed, and the upper one is movable and adjustable vertically in a parallel manner to the first one.

4. The adjustable size selection device for ichthyological products according to claim 1, **characterized in that** of said two superimposed screening surfaces the upper is fixed while the lower one is movable and adjustable vertically in a parallel manner to the upper one.

5. The adjustable size selection device for ichthyological products according to claim 1, **characterized in that** both of said screening surfaces are movable and/or mutually adjustable vertically and/or horizontally.

6. The adjustable size selection device for ichthyological products according to claim 1, **characterized in that** it can also be used to select fruit and/or other agricultural products.

7. The adjustable size selection device for ichthyological products according to claim 1, **characterized in that** all the screening elements, rods or cylinders are mounted and/or fixed on a single frame. Said elements are alternately fixed and movable, the movable elements being adjustable and movable at right angles and vertically with respect to the fixed ones.

8. The adjustable size selection device for ichthyological products according to claim 1, **characterized in that** it is constituted, in a superimposed manner, by more than two screening surfaces or series of parallel rods or cylinders having the same pitch, each staggered by half a pitch with respect to the preceding series.

9. The adjustable size selection device for ichthyological products according to claim 8, **characterized in that** each surface or screening series is adjustable at right angles in respect to the others and cooperates with them in coordination in order to determine various selecting size simultaneously.

10. The adjustable size selection device for ichthyological products according to the preceding claims and according to what has been substantially described and illustrated in the accompanying drawings for the specified purposes.
